# EUROPEAN PATENT APPLICATION

(11) **EP 0 895 719 A1**
(43) Date of publication of application: **10.02.1999**
(21) Application number: 98650051.0
(22) Date of filing: 05.08.1998
(51) Int. Cl.: A23L 3/005, A23L 3/3418

(54) **Infra-red sterilisation of packaged food**

(30) Priority: 06.08.1997 JP 211695/97
(71) Applicant: Hus Products Limited, Osaka-Shi, Osaka-fu (JP)
(72) Inventor: Ikeda, Tamehiko, Sennan-shi, Osaka-fu (JP)
(74) Representative: O'Connor, Donal Henry

(57) **Abstract**

Preserved foods are produced by the steps of placing one or more food materials or foodstuffs in an open-top a packaging vessel of synthetic resin; replacing air in the vessel with an inert gas; sealing an open-top of the packaging vessel with a sealing member; and applying infrared rays to the sealed packaging vessel to cook and sterilize the food materials or foodstuff packaged in the vessel.

## Description

### FIELD OF THE INVENTION

The present invention relates to a method of producing preserved foods and, more particularly, to a method for performing cooking and sterilization of food materials or foodstuffs, following packaging the same into vessels.

### PRIOR ART

Up to now, there have been used various methods of producing preserved foods. The most widely used methods are boiling and retorting methods. In the boiling method, previously cooked foods are packed in vessels such as bags, trays or bottles, and then sterilized by eating with hot water of 85 to 95 °C for 45 to 90 minutes. The produces produced by the boiling process includes bottled foods, boiled wild plant packs, seasoned and fried bean curds, and the like. In the retorting process, food materials are heatead in a steam boiler under pressure at a temperature of 115 to 132 °C for 15 to 60 minutes. The products by retorting includes curry bags, packed rice trays, canned goods, and the like.

However, these conventional methods involve heating of previously cooked foods or food materials at a high temperature for a long period of time to perform sterilization following or simultaneously with cooking. Thus, the previously cocked foods or food materials lose taste thereof. In particular, if the food materials contain protein substances and heated at a temperature of about 100 °C and above for a long time of period, they are considerably denatured by heat. Further, there is a fear of causing bacteriogenic secondary pollution during packaging since the cooked foods are exposed to air after cooking. The products occasionally become hard by vacuum packaging so that the preserved foods taken out of the bag have to be broken into flakes.

In addition, the conventional methods are followed by discharge of a large quantity of heat and/or steam into the working space, so that workers are obliged to work under harsh conditions of a high temperature and a high humidity.

To solve these problems, the inventor has developed a method of producing preserved foods, comprising the steps of vacuum packaging foods to be processed with a packaging medium of a gas impermeable thermoplastic material which allows infrared rays to pass therethrough, and irradiating infrared rays of wavelengths ranging from 1.5 to 30 µm and a lower limit of wavelengths of 1.5 to 2.0 µm onto the packaged food under the reduced pressure while maintaining an ambient temperature of the package to 65 to 100 °C to cook and sterilize the food.

The above method makes it possible to improve the working environment and tastes of the preserved foods since the foods are cooked and sterilized at a lower temperature within a short time. However, the packaging medium or vessel change the shape with increase of the degree of vacuum, causing depreciation of the commercial value of the products. In addition, the products may change the shape because of increase in the internal pressure of the packaging vessel at the time of heating of the products.

### SUMMARY OF THE INVENTION

It is therefore an object of the present invention to provide a method of producing preserved foods, which makes it possible to prevent packaging vessels from being deformed by residual air in the vessel during packaging as well as to pasteurize and cock foods at a relatively low temperature while preventing the foods from losing its taste.

The above and other objects are solved by decreasing the degree of vacuum and replacing the residual air with inert gas to prevent packaging vessels from deformation, and by applying infrared rays to the packaged food materials or foodstuffs at relatively iow temperatures to perform cooking and sterilization without causing loss of taste of the food materials or foodstuffs.

According to the present invention, there is provided a method of producing preserved foods, which comprises the steps of:
placing one or more food materials or foodstuffs in an open-topped packaging vessel of synthetic resin;
replacing air in the vessel with an inert gas;
sealing an open-top of said packaging vessel with a sealing member; and
applying infrared rays to the sealed packaging vessel to cook and sterilize the food materials or foodstuff packaged in the vessel.

In a preferred embodiment of the present invention, the infrared rays have wavelengths ranging from 1.5 to 30 µm and have a lower limit wavelength of 1.5 to 2.5 µm. Preferably, the packaged food materials are treated by infrared rays at an ambient temperature of not lower than 65 °C but not higher than 100 °C.

The method of the present invention may be applied to food materials or foodstuffs such as, for example, fishes, shellfisches, meats, food plants and the like.

The packaging vessel may be made of any known packaging materials of plastics conventionally used for food packaging. In particular, it is preferred to use synthetic resins such as, for example, polyolefines (e.g., polyethylene (PE), polypropylene (PP)), polyamide, polyaminde 6, polyaminde 66, polyaminde 12, polyaminde 11, polyaminde MDX 6, poly(ethylene terephthalate) (PET), poly(vinylidene chloride) plastics (PVDC), polycarbonate (PC), polystylene (PS), cellulose acetate (CA), cellulose acetate propionate(CAP), and cellulose acetate butyrate (CAB), poly(vinyl alcohol) (PVA), poly(vinyl chloride) plastics(PVC), ethylene-vinyl alcohol copolymer (EVCH), KOP, CPP, EVOP, and the like. Also, the material for the vessel may be plastics containing a filler such as, for example, talc, calcium carbonate, silica or the like.

A material for sealing materials and for bag-shaped vessels may be one of single films, laminated films, coated films, metal-deposited films or other composite films made of a synthetic resin mentioned above. Metals used for laminate films or metal deposited films include aluminum, silver or the like. If the packaging vessel is made of a laminated film or metal-deposited film, it is necessary to provide one or more windows through which infrared rays can pass into the interior of the packaging vessel.

As the inert gas, there may be employed any gas, which is stable and is never activated by heating with infrared rays, but the most preferred inert gas is nitrogen gas in view of food hygienics.

The method of the present invention may be carried out by use or an infrared cooking machine disclosed in a specification of unexamined Japanese utility model publication (Utility model application serial number 62-2230). However, the method of the present invention may be carried out by use of any other cooking devices provided that it can radiate infrared rays ranging from 1.5 to 33 µm. The range of wavelength and lower limit of wavelength of the infrared rays depends on the temperature of an infrared heater or an infrared heater. For this reason, the infrared heater is generally set to a temperature within the range of 250 to 500 °C so that it generates infrared rays having a lower limit of wavelength falling within the range of 1.5 to 2.5 µm.

The present invention will become more fully understood from the detailed description given hereinbelow and the accompanying drawings which are given by way of illustration only, and thus are not limitative of the present invention.

### BRIEF DESCRIPTION OF THE DRAWINGS

Fig. 1 is a schematic diagram of an infrared cooking device used in a method of producing preserved foods according to the present invention;
Fig. 2 is a sectional view illustrating steps of packaging food materials in a vessel; and
Fig. 3 is a graph illustrating changes of temperatures of a sealed vessel containing food materials when infrared rays are applied thereto.

### DETAILED DESCRIPTION OF THE PREFERRED EMBODIMENT

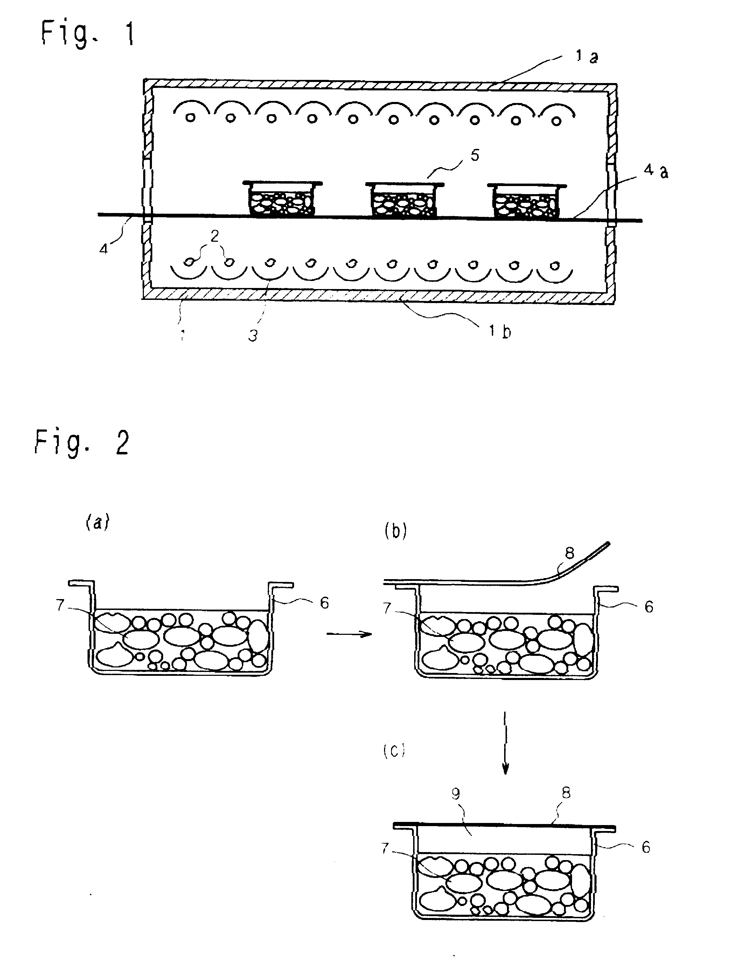

As illustrated in Fig. 1, an infrared cooking device generally comprises a body 1, plural infrared heaters 2 arranged in two rows parallel to upper and lower walls of the body 1 at certain intervals, reflecting plates 3 each being arranged on a backside of the infrared heater 2, and supporting means 4 for supporting half-stuff 5 of food materials or foodstuff.

The heaters 2 are slidably mounted on frames of the body 1 to adjust a distance between upper and lower rows of infrared heaters 2. The distance between the upper and lower rows of infrared heaters 2 is generally set to 15 to 50 cm. If the distance between the upper and lower heaters is less than 15 cm or exceeds 50 cm, the heaters have much effect on the packaging vessels and decrease in radiation efficiency of infrared rays.

The infrared heaters 2 are so controlled as to keep them to a temperature of 250 to 500 °C. If the temperature of the infrared heaters 2 is lower than 250 °C, it is difficult to generate infrared rays with desired wavelengths, in particular, far infrared rays which enter into an interior of each food material or foodstuff and directly heat the food material or foodstuff to be treated. If the temperature exceeds 500 °C, the radiation energy of the heater increases, the lower wavelength becomes considerably short, resulting in deformation of the package, or increase of electric power consumption, which in turn causes failure in energy-saving due to the use of infrared rays.

The heaters 2 maintained within the above temperature range radiate infrared rays which have wavelengths of 1.5 to 30µm having the lower limit of wavelengths of not less than about 1.5 µm but not more than 2.5 µm, thus making it possible to cook and sterilize food materials effectively. The reflecting plates 3 are made of a metal having a nigh reflectivity reflecting, such as aluminum, nickel or the like.

The supporting means 4 comprises a pair of motor-driven chain belts 4a provided with a plurality of flat panels or trays and so arranged that the trays moved along a middle plane of the body 1. Any other known supporting means may be used for this purpose. For example, the supporting means 4 may be composed of a wire netting, woven wires or the like and may be removably or fixedly arranged in the body of the cooking device. Preferably, the supporting means such as wire netting or trays have a non-bright surface or a dark surface coated with a black paint.

Table 1 shows characteristics of the infrared heaters 2. The radiation characteristics were measured at 296 °C, using, as a specimen, powdered radiating of the infrared heaters 2, An infrared detecting means is separated by 20 cm from the specimen.

**TABLE 1**

| wavelengths (µm) | Infrared quantities (W/cm²) |
|---|---|
| 0.7 - 3.5 | 1.18 x 10⁻³ |
| 1.5 - 14 | 8.58 x 10⁻³ |
| 7 - 14 | 4.32 x 10⁻³ |
| 7 - 30 | 4.38 x 10⁻³ |

As can be seen from the result shown in Table 1, the radiation energy of infrared rays with wavelengths within the range of 0.7 to 3.5 µm is 1.18 x 10⁻³ W/cm², which is about 1/4 of the radiation energy (8.58 x 10⁻³ W/cm²) of infrared rays with wavelengths within the range of 1.5 to 14 µm. Thus, the radiation energy of infrared rays having wave lengths of less than 1.5 µm is negligible and ineffective to cooking of the food materials or foodstuffs. Further, the above infrared heaters 2 radiates infrared rays substantially within the range of 1.5 to 30 µm under the conditions of about 300 °C.

As illustrated in Fig. 2, the packaged food 5 to be treated is prepared by placing foodstuffs 7 and flavoring materials in a commercially available packaging vessel or tray 6 made of PBP (polypropylene + EROH) as shown in Fig. 2 (a) in a packaging machine, pre-sealing an opening of the charged vessel with a sealing material such as a laminated film (PP + NY) as shown in Fig. (b), evacuating the pre-sealed vessel of air in the packaging machine while introducing an inert gas (e.g., nitrogen gas) into the packaging machine to replace the residual air with an inert gas, and sealing the vessel hermetically with a sealing film 8 as shown in Fig. 2(C).

The thus packaged foods 5 are put into the infrared cooking device shown in Fig. 1 and exposed to infrared rays to perform cooking and sterilization of the foodstuffs. By applying the infrared rays to the vessel, the foodstuff 7 in the vessel is directly heated and sterilized by infrared rays passing through the packaging vessel 6 and sealing film 8.

Since the space in the vessel is charged with the inert gas to keep its internal pressure equal to or slightly lower than the atmospheric pressure, the vessel is prevented from deformation due to evacuation, which may occur in the method of the prior art. Further, the air in the vessel has been replaced with the inert gas so that the packaging vessel has an internal pressure equal to or slightly lower than the atmospheric pressure, which makes it possible to avoid deformation of the vessel during radiation of infrared rays as the inert gas prevent the vessel from increase in internal pressure.

### Example

There were prepared packaging vessels (18cm in lenght, 12 cm in width, 2.5 cm in depth of PBP and a part coated film of a synthetic resin (i.e., biaxially oriented polypropylene film partially coated with polyamide 6). A piece of raw mackerel (100g) was put into a packaging vessel together with 85 g of flavoring materials, and then hermetically sealed with heat after replacing air in the vessel with nitrogen gas.

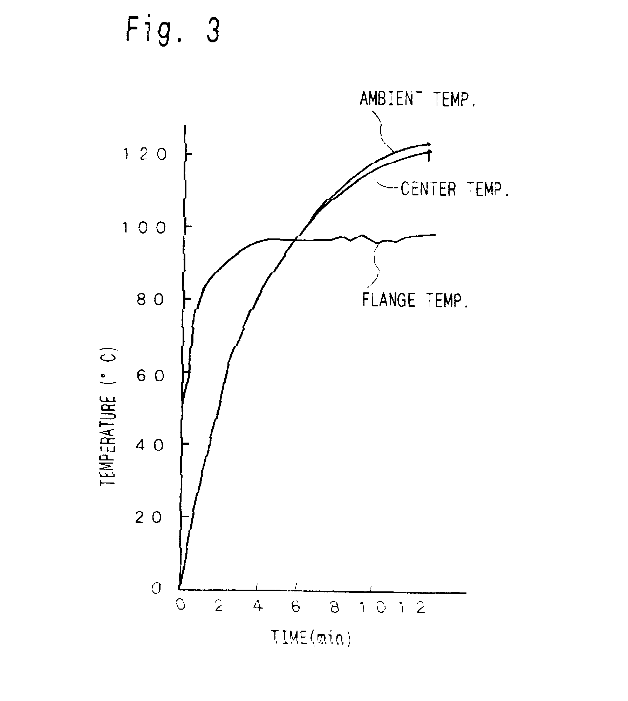

The sealed vessels were put into an infrared cooking device of Fig. 1 and placed on trays arranged in the middle of upper and lower rows of the heaters spaced by 20 cm. The sealed vessels were then heated by infrared heaters maintained at 320°C for 12 minutes. During irradiation of infrared rays, measurements were made on temperatures of the center and flange of the vessel together with ambient temperature. Results are shown in Fig. 3.

As can be seen from the results shown in Fig. 3, the center temperature is risen to 80 °C after seven minutes and 20 seconds, while the flange temeprature is 97 °C. After 12 minutes from the start of irradiation, the center temperature is risen to 115 °C while the flange temeprature was rised to 98,5 °C. A bacteriological examination after heating showed than coliform bacteria is 0 and than general viable cell number is not more than 100 per gram. The vessel showed no deformation during heating and even after heating.

It will be seen that according to the present invention, it is possible to produce fully cooked, preserved foods under the above conditions by applying infrared rays to the vessel or tray of which an inert gas is replaced for the remaining air in the head space.

For comparison, some of the sealed vesseis prepared in the above Example were heated with an electromagnetic oven (Power ouptut: 600W), but cooking was never completed as the vessel was burst after 3 minutes.

As can be seen from the above, the present invention makes it possible to produce preserved foods within a short time without causing secondary pollution since food materials or foodstuffs are charged into packaging vessels together with an inert gas and then immediately cooked and sterilized under the packaged conditions. Further, the packaging vessels are prevented from deformation during cooking since the cooking and sterilization of the food materials are carried out by infrared rays at an ambient temperature of 65 to 100 °C and since the internal spaces of the packaging vessels are charged with an inert gas. Thus, the products can be sold at a store under warmed conditions by keeping them in an infrared cocking device with a temperature of the above range.

According to the present invention, it is possible to prevent preserved foods from hardening during production even if the products are in the form of pouches. Further, since the foodstuffs are cooked and sterilized by infrared rays directly, it is possible to use commercially available plastic vessels and films, which in turn makes it possible to reduce the production cost of preserved foods.

Further, the cooking and sterilization are carried out by infrared rays directly, it is possible to minimize the energy loss, as compared with convective heating or conductive heating employing hot water or steam. In addition, the use of infrared rays scarcely discharges heat or steam into the working atmosphere, thus making it possible to prevent the working space from elevation of temperature and humidity, which in turn makes it possible to improve working conditions.

## Claims

1. A method of producing preserved foods, which comprises the steps of:
placing one or more food materials or foodstuffs in an open-topped packaging vessel of synthetic resin;
replacing air in the vessel with an inert gas;
sealing an open-top of said packaging vessel with a sealing member; and
applying infrared rays to the sealed packaging vessel to cook and sterilize the food materials or foodstuff packaged in the vessel.

2. The method of claim 1, wherein the infrared rays have wavelengths ranging from 1.5 to 30 µm and have a lower limit wavelength of 1.5 to 2.5 µm.

3. The method of claim 1, wherein said packaging material is made of a material selected from the group consisting of polyolefines, polyamide, polyaminde 6, polyaminde 66, polyaminde 12, polyaminde 11, polyaminde MDX 6, poly(ethylene terephthalate), poly(vinylidene chloride) plastics, polycarbonate, polystylene, cellulose acetate, cellulose acetate propionate, and cellulose acetate butyrate, poly(vinyl alcohol), poly(vinyl chloride) plastics, ethylene-vinyl alcohol copolymer, KOP, CPP and EVOP.

4. The method of claim 1, wherein cooling and sterilization of the food materials or foodstuff packaged in the vessel is carried out by applying infrared rays at an ambient temperature of not lower than 65 °C but not higher than 100 °C.

5. The method according to claim 1, wherein said sealing material is a laminated film composed of a thermoplastic film and a metal layer laminated thereon.

6. The method according to claim 5, wherein said laminated film is provided with at least one area having no metal layer.
